# EUROPÄISCHE PATENTSCHRIFT

(11) **EP 2 059 419 B1**
(45) Veröffentlichungstag und Bekanntmachung des Hinweises auf die Patenterteilung: **07.04.2010**
(21) Anmeldenummer: 08715884.6
(22) Anmeldetag: 20.02.2008
(51) Int. Cl.: B60R 21/215

(54) **SCHARNIERUNG FÜR EINEN AIRBAGDECKEL**
HINGE FOR AN AIRBAG COVER
CHARNIERE POUR COUVERCLE D'AIRBAG

(30) Priorität: 01.03.2007 DE 202007003172 U; 30.11.2007 DE 202007016848 U
(43) Veröffentlichungstag der Anmeldung: 20.05.2009
(73) Patentinhaber: K.L. Kaschier- und Laminier GmbH, 48599 Gronau-Epe (DE)
(72) Erfinder: RORING, Albert, 48599 Gronau-Epe (DE); GRIMMELT, Michael, 48599 Gronau-Epe (DE)
(74) Vertreter: COHAUSZ DAWIDOWICZ HANNIG & SOZIEN
(86) Internationale Anmeldenummer: PCT/EP2008/001313
(87) Internationale Veröffentlichungsnummer: WO 2008/104311

(56) Entgegenhaltungen:
- EP-A- 1 731 381
- WO-A-03/033313
- DE-A1- 19 530 346
- DE-A1-102004 010 643
- US-A1- 2006 043 701

## Beschreibung

Die Neuerung betrifft eine Scharnierung für einen Airbagdeckel mit einem textilen Scharnier, mit dem ein Airbagdeckel mit einem ihn umgebenden Trägerbereich verbindbar ist. Eine solche Scharnierung ist aus dem Dokument EP-A-1 731 381 bekannt.

Beim Airbagschuss öffnet sich der Airbagdeckel, um das Heraustreten des Airbags zu ermöglichen, und das Airbagdeckelscharnier ermöglicht eine Führung des Airbagdeckels beim Öffnen.

Ein Airbagdeckelscharnier aus Gewebe oder Gewirke ist aus der WO 03/033313 "Innenverkleidungsteil für Kraftfahrzeuge" bekannt. Je nach Größe des eingesetzten Airbagdeckels treten beim Airbagschuss unterschiedliche Kräfte auf das Scharnier des Airbagdeckels auf. Je größer der Airbagdeckel bzw. je schwerer ein Airbagdeckel ist, desto höher sind die auf das Scharnier auftretenden Kräfte, und es ist zum einen sicherzustellen, dass sich der Airbagdeckel beim Airbagschuss leicht öffnet und zum anderen ist sicherzustellen, dass dennoch ein Lösen des Airbagdeckels von dem ihn umgebenden Trägerteil auf alle Fälle ausgeschlossen wird, um die Personen im Bereich des Airbags durch umherfliegende Teile nicht zu gefährden. Bei dem aus dem Stand der Technik bekannten Scharnier eines Airbagdeckels ist nicht auszuschließen, dass bei ungünstigen Bedingungen das als Gewebe oder Gewirke ausgeführte Scharnier reißt.

Der Neuerung liegt daher die Aufgabe zugrunde, ein Scharnier für einen Airbagdeckel derart auszubilden, dass es bei kostengünstiger Herstellbarkeit ein Reißen bzw. Lösen des Scharniers für den Airbagdeckel sicher verhindert und zudem ein leichtes Öffnen des Airbagdeckels ermöglicht.

Diese der Neuerung zugrunde liegende Aufgabe wird durch die Lehre des kennzeichnenden Teiles des Hauptanspruches gelöst.

Mit anderen Worten ausgedrückt, wird ein Scharnier für einen Airbagdeckel vorgeschlagen, dass zumindest zwei kraftaufnehmende Systeme aufweist, nämlich zum einen ein textiles Flächengebilde und zum anderen Stehfäden als zweites Kraftaufnahmesystem, die die Belastbarkeit des textilen Flächengebildes erhöhen und bei einer definierten Kraftaufnahme bei einer Belastung des Airbagdeckelscharniers beim Öffnen des Airbagdeckels reißen.

Vorteilhafte Ausgestaltungen der Neuerung sind in den Unteransprüchen erläutert.

In vorteilhafter Ausgestaltung sind die Stehfäden in Richtung der zu erwartenden Zugbelastung des Scharniers des Airbagdeckels ausgerichtet.

Dabei können die Stehfäden eine geringere Elastizität als die Elemente des textilen Flächengebildes aufweisen.

In vorteilhafter Ausgestaltung sind die Stehfäden gleichmäßig über die Fläche des textilen Flächengebildes verteilt, um eine gleichmäßig verteilte hohe Kraftaufnahme der beim Öffnen des Airbagdeckels auftretenden Kräfte im Bereich des Scharniers zu ermöglichen.

Die Stehfäden können ebenfalls ausschließlich in den Randbereichen des Airbagdeckelscharniers ausgebildet sein, um im Fall des Airbagschusses ein Einreißen des textilen Flächengebildes zu verhindern oder zumindest zu minimieren.

In vorteilhafter Ausgestaltung ist das textile Flächengebilde als Gewirke ausgebildet, um eine günstige Produktion zu ermöglichen und durch das Gewirke eine gute Kraftaufnahme für die beim Öffnen des Airbagdeckels auf das Scharnier auftretenden Kräfte auf das Scharnier zu ermöglichen, nachdem die Stehfäden gerissen sind.

In dem Gewirke kann beispielsweise ein Stehfaden in jeder Masche des Gewirkes vorgesehen sein oder es ist möglich, neben einer mit Stehfaden versehenen Masche des Gewirkes eine oder mehrere Maschen ohne Stehfaden anzuordnen.

In vorteilhafter Ausgestaltung kann das textile Flächengebilde mitsamt der Stehfäden als Teil eines Laminataufbaues sein, d. h. auf das textile Flächengebilde kann eine weitere Lage auflaminiert sein, um beispielsweise eine bessere Handhabung des textilen Flächengebildes zu ermöglichen.

Bei dem vorgeschlagenen Airbagdeckelscharnier werden somit mindestens zwei Kraftaufnahmesysteme verwendet, wobei das erste Kraftaufnahmesystem das textile Flächengebilde ist, das z. B. ein Gewirke sein kann, und das zweite Kraftaufnahmesystem stellen die Stehfäden dar, die in dem textilen Flächengebilde vorhanden sind.

Sobald ein Öffnen des Airbagdeckels beim Airbagschuss erfolgt, werden Kräfte auf das Airbagdeckelscharnier eingeleitet, die zunächst ein Reißen der Stehfäden bewirken, und hierdurch wird ein Teil der auftretenden Kräfte aufgenommen bzw. absorbiert. Anschließend erfolgt eine elastische Dehnung des Gewirkes als zweites kraftaufnehmendes System und bewirkt eine endgültige Aufnahme der auf das Scharnier auftretenden Kräfte, und durch diese. Zweistufigkeit zweier kraftaufnehmender Systeme wird sicher verhindert, dass es zu einem zum Abreißen des Airbagdeckels beim Öffnen desselben kommt. Zudem kann durch die Quantität und Qualität der eingesetzten Stehfäden eingestellt werden, wie weit der Airbagdeckel öffnet, um ein Beschädigen z. B. der Frontscheibe eines PKWs durch den sich rasch öffnenden Airbagdeckel zu verhindern. Vielmehr kann die Öffnungsweite und auch Öffnungsgeschwindigkeit durch Verwendung entsprechend vieler Stehfäden bzw. durch eine besondere Reißfestigkeit derselben so eingestellt werden, dass sich der Airbagdeckel ausreichend weit öffnet, jedoch ein Überschlagen des geöffneten Airbagdeckels z. B. an die Windschutzscheibe nicht erfolgt.

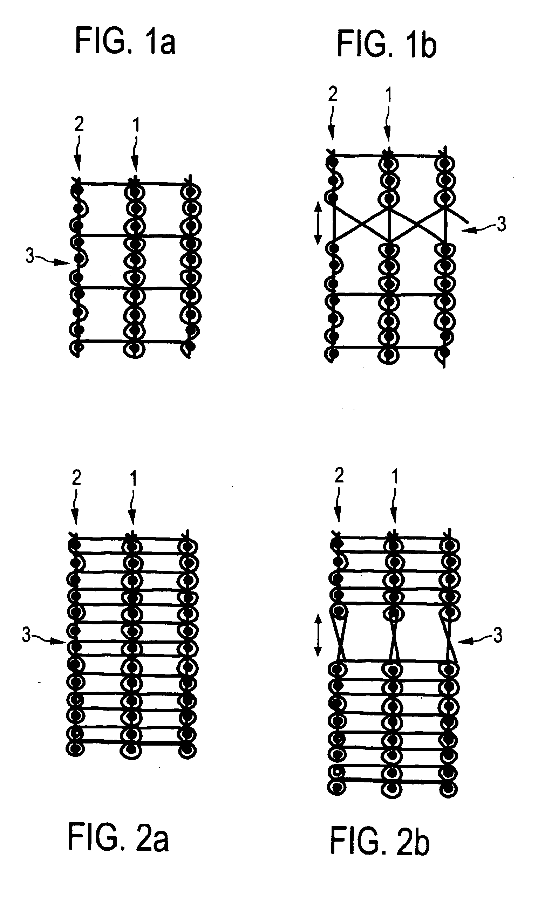

## Patentansprüche

1. Airbagdeckelscharnier mit einem textilen Scharnier, dass sowohl mit dem Airbagdeckel als auch mit einem den Airbagdeckel umgebenden Trägerteil verbindbar ist, **dadurch gekennzeichnet, dass** das Scharnier zwei unterschiedliche kräfteaufnehmende Systeme beinhaltet, nämlich ein textiles Flächengebilde als ein System, das mit zusätzlichen Stehfäden als zweites System kombiniert ist, wobei die Stehfäden bei einer Zugbelastung auf das Airbagdeckelscharnier als erstes kraftaufnehmendes System reißen.

2. Airbagdeckelscharnier gemäß Anspruch 1, **gekennzeichnet durch** die Stehfäden, die in Richtung der zu erwartenden Zugbelastung des Scharniers ausgerichtet sind.

3. Airbagdeckelscharnier gemäß Anspruch 1 oder 2, **gekennzeichnet durch** die Stehfäden, die eine geringere Elastizität als die Elemente des textilen Flächengebildes bzw. des textilen Flächengebildes selbst aufweisen.

4. Airbagdeckelscharnier gemäß einem der vorhergehenden Ansprüche, **gekennzeichnet durch** die über die Fläche des textilen Flächengebildes gleichmäßig verteilten Stehfäden.

5. Airbagdeckelscharnier gemäß einem der vorhergehenden Ansprüche, **gekennzeichnet durch** die ausschließlich in den Randbereichen des Airbagdeckelscharniers ausgebildeten Stehfäden.

6. Airbagdeckelscharnier gemäß einem der vorhergehenden Ansprüche, **gekennzeichnet durch** ein Gewirke als textiles Flächengebilde.

7. Airbagdeckelscharnier gemäß Anspruch 6, **gekennzeichnet durch** die Ausbildung eines Stehfadens in jeder Masche des Gewirkes.

8. Airbagdeckelscharnier gemäß Anspruch 6, **gekennzeichnet durch** die Abfolge einer mit Stehfaden versehenen Masche des Gewirkes mit einer oder mehreren Maschen ohne Stehfaden.

9. Airbagdeckelscharnier gemäß einem der vorhergehenden Ansprüche, **gekennzeichnet durch** das textile Flächengebilde, das ein Teil eines Laminataufbaues darstellt.

## Claims

1. Airbag cover hinge with a textile hinge, which may be connected not only to the airbag cover but also to a carrier part surrounding the airbag cover, **characterised in that** the hinge contains two different force transducing systems, namely a flat shaped textile item as one system, which is combined with additional stationary threads as a second system, in which the stationary threads tear when there is tensile strain on the airbag cover hinge as a first force transducing system.

2. Airbag cover hinge according to claim 1, **characterised by** the stationary threads, which are aligned in the direction of the tensile strain to be expected on the hinge.

3. Airbag cover hinge according to claim 1 or 2, **characterised by** the stationary threads, which have less elasticity than the elements of the flat shaped textile item or the flat shaped textile item itself.

4. Airbag cover hinge according to one of the previous claims, **characterised by** the stationary threads distributed evenly over the surface of the flat shaped textile item.

5. Airbag cover hinge according to one of the previous claims, **characterised by** the stationary threads formed exclusively in the edge areas of the airbag cover hinge.

6. Airbag cover hinge according to one of the previous claims, **characterised by** a fabric as the flat shaped textile item.

7. Airbag cover hinge according to claim 6, **characterised by** the formation of a stationary thread in each mesh of the fabric.

8. Airbag cover hinge according to claim 6, **characterised by** a mesh of the fabric provided with stationary threads being succeeded by one or several meshes without stationary threads.

9. Airbag cover hinge according to one of the previous claims, **characterised by** the flat shaped textile item, which represents a part of a laminate structure.

## Revendications

1. Charnière pour couvercle d'airbag comprenant une charnière textile, qui peut être assemblée aussi bien avec le couvercle d'airbag qu'avec une partie support entourant le couvercle d'airbag, **caractérisée en ce que** la charnière comporte deux systèmes différents de réception des forces, à savoir une structure plane textile en tant qu'un système, qui est combinée à des fils droits supplémentaires en tant que second système, les fils droits se déchirant lors d'une contrainte de traction sur la charnière de couvercle d'airbag en tant que premier système de réception des forces.

2. Charnière pour couvercle d'airbag suivant la revendication 1, **caractérisée par** les fils droits, qui sont orientés en direction de la contrainte de traction prévisible de la charnière.

3. Charnière pour couvercle d'airbag suivant l'une des revendications 1 et 2, **caractérisée par** les fils droits, qui présentent une élasticité plus faible que les éléments de la structure plane textile ou de la structure plane textile elle-même.

4. Charnière pour couvercle d'airbag suivant l'une des revendications précédentes, **caractérisée par** les fils droits répartis régulièrement sur la surface de la structure plane textile.

5. Charnière pour couvercle d'airbag suivant l'une des revendications précédentes, **caractérisée par** les fils droits réalisés exclusivement dans les zones de bordure de la charnière de couvercle d'airbag.

6. Charnière pour couvercle d'airbag suivant l'une des revendications précédentes, **caractérisée par** un tissu à mailles en tant que structure plane textile.

7. Charnière pour couvercle d'airbag suivant la revendication 6, **caractérisée par** la réalisation d'un fil droit dans chaque maille du tissu.

8. Charnière pour couvercle d'airbag suivant la revendication 6, **caractérisée par** la succession d'une maille du tissu, munie du fil droit, avec une ou plusieurs mailles sans fil droit.

9. Charnière pour couvercle d'airbag suivant l'une des revendications précédentes, **caractérisée par** la structure plane textile, qui représente une partie d'une structure d'agglomérés laminés.
